Europäisches Patentamt

European Patent Office

Office européen des brevets

(11) Numéro de publication : **0 486 352 A1**

# (12) DEMANDE DE BREVET EUROPEEN

(21) Numéro de dépôt : **91402925.1**

(22) Date de dépôt : **31.10.91**

(51) Int. Cl.⁵ : **C03C 1/00,** C03C 3/068, C03C 3/095, C01B 33/20

(30) Priorité : **13.11.90 FR 9014029**

(43) Date de publication de la demande : **20.05.92 Bulletin 92/21**

(84) Etats contractants désignés : **AT DE ES FR GB IT NL**

(71) Demandeur : **RHONE-POULENC CHIMIE 25, quai Paul Doumer F-92408 Courbevoie Cédex (FR)**

(72) Inventeur : **Gadea, Jean-Claude 18 rue Jean et May F-1700 La Rochelle (FR)** Inventeur : **Glatron, Christian 45 rue du Théatre F-75015 Paris (FR)**

(74) Mandataire : **Dutruc-Rosset, Marie-Claude et al RHONE-POULENC INTERSERVICES Service Brevets Chimie 25, Quai Paul Doumer F-92408 Courbevoie Cédex (FR)**

(54) **Procédé d'obtention d'une composition verrière à base de silicate de terres rares et procédé de fabrication de ce silicate.**

㊻ La présente invention concerne un procédé de fabrication d'une composition verrière à base de silicates métalliques, consistant à introduire au moins une terre rare telle que le lanthane sous forme de silicate de terre rare pour abaisser le point de fusion et faciliter l'insertion de la silice dans le réseau du verre.

EP 0 486 352 A1

La présente invention concerne un procédé d'obtention d'une composition verrière.

Elle concerne plus particulièrement un procédé d'obtention d'une composition verrière à base notamment de silicates métalliques et contenant au moins une terre rare.

Les compositions verrières comme par exemple les compositons verrières pour verre optique comprennent souvent comme modifieurs au moins une terre rare qui permet notamment d'améliorer les propriétés optiques du verre. Ainsi, la présence de lanthane permet d'une part d'augmenter l'indice de réfraction de verre et de diminuer l'indice de dispersion de la lumière de celui-ci.

Ces compositions verrières sont généralement obtenues par mélange des différents oxydes métalliques constituant le verre puis fusion du mélange à une température élevée, de l'ordre de 1200°C à 1800°C, par chauffage progressif.

Toutefois, il est constamment recherché des moyens pour abaisser le point de fusion de la composition verrière, et également améliorer l'incorporation des constituants dans le réseau formant le verre.

La présente invention a notamment pour but de procurer une solution à ces problèmes en proposant un procédé d'obtention d'une composition verrière présentant un point de fusion plus bas que dans les procédés conventionnels et également une amélioration de la vitesse de fusion de la composition provenant notamment d'une capacité plus grande pour la silice de former un réseau avec les autres constituants de la composition.

A cet effet, l'invention propose un procédé d'obtention d'une composition verrière à base notamment de silicates métalliques et contenant comme modifieur au moins une terre rare caractérisé en ce qu'il consiste à ajouter la terre rare dans le mélange de poudre précurseur de la composition verrière sous la forme d'un silicate de terre rare, puis à fondre le mélange pour former le verre.

L'incorporation d'un silicate de terre rare abaisse le point de fusion de la composition verrière par rapport à celle observée avec un mélange d'oxydes.

De plus, on observe une augmentation de la vitesse de fusion de la composition. Cette augmentation peut s'expliquer par le fait que les motifs $SiO_2$ apportés par le silicate de terre rare sont déjà insérés dans un réseau, l'insertion des autres éléments dans ce réseau ou le réarrangement de ce réseau avec un réseau former par les autres composants est facilité.

Cette explication n'est donnée qu'à titre indicatif et ne limite pas la portée de l'invention.

Le silicate de terre rare est ajouté dans la composition verrière en une quantité comprise entre 10 % et 70 % en poids, exprimé en oxydes de terres rares par rapport à la masse totale du mélange également exprimée en oxyde des éléments la composant.

L'invention s'applique notamment aux compositions verrières pour verre optique tel que les verres silicates, borosilicates, aluminosilicates ou boroaluminosilicates. Elle peut également être utilisée pour la fabrication de compositions verrières pour d'autres applications comme notamment les compositions pour glaçure de substrat tel que céramique.

Bien entendu, ces compositions verrières peuvent comprendre d'autres constituants classiquement utilisés comme par exemple des fondants, des additifs pour favoriser l'affinage du verre, ou autres éléments modifieurs.

Selon une autre caractéristique de l'invention, la terre rare est choisie dans le groupe comprenant du lanthane, de l'yttrium, du gadolinium, du cérium, ou leurs mélanges.

Le silicate de terre rare peut être obtenu par tous procédés classiques et notamment par précipitation par mélange d'une solution d'un composé de terre rare avec une solution de silicate métallique.

Ce procédé permet par séparation et séchage du précipité d'obtenir un silicate de terre rare contenant de la silice sous forme libre. Ce produit peut être utilisé dans le procédé de l'invention, tel quel ou après calcination à une température supérieure à 800°C.

Toutefois, selon la présente invention, on utilise de préférence un silicate de terre rare exempt de silice libre. Un tel composé peut être fabriqué par un procédé qui est également un objet de la présente invention.

Ainsi, le procédé de préparation d'un silicate de terre rare exempt de silice libre est caractérisé en ce qu'il consiste à ajouter dans une solution ou suspension d'un composé de terres rares, une solution de silicate métallique ou d'ammonium pour ainsi précipiter le silicate de terres rares. Selon l'invention, cette précipitation est réalisée avec addition d'un composé basique pour obtenir un pH supérieur à 9 en fin de précipitation.

Le précipité est ensuite séparé puis après lavage et séchage éventuels, le précipité est traité thermiquement à une température supérieure à 800°C pour ainsi former un silicate de terre rare exempt de silice libre.

La température de traitement thermique est avantageusement comprise entre 900°C et 1200°C.

Selon une autre caractéristique de l'invention, la quantité de silicate métallique est déterminée pour avoir un rapport atomique $SiO_2/TR_2O_3$ compris entre 1,5 et 3, de préférence entre 1,7 et 2,9, en fin de précipitation.

Les silicates métalliques convenables pour l'invention sont notamments les silicates de métaux alcalins ou d'ammonium.

Comme composé basique convenables pour l'invention, on peut citer les hydroxydes métalliques comme les hydroxydes d'alcalins, l'ammoniaque.

Le composé basique peut-être ajouté sous forme de solution ou à l'état pur.

L'étape de précipitation est réalisée à une température comprise entre 15°C et 80°C, avantageusement à température ambiante (15°C - 25°C).

Le milieu réactionnel est avantageusement agité pendant cette étape, et peut être maintenu sous agitation pendant 1 ou 2 heures après la fin de l'addition des solutions de silicate métallique et/ou de composé basique pour ainsi permettre une meilleure précipitation.

Le précipité obtenu est ensuite séparé selon les moyens connus tels que filtration, décantation, centrifugation.

Le précipité est ensuite séché à une température d'environ 110°C.

Pour compléter la réaction de la silice et de la terre rare, le précipité est soumis à un traitement thermique à une température supérieure à 800°C, de préférence entre 900°C et 1200°C.

L'analyse par diffraction aux rayons X du produit obtenu confirme l'absence de silice libre et la présence de silicate de terre rare.

Le composé de terre rare et le silicate métallique sont choisis de manière en ce que l'espèce chimique, généralement un anion, associée à la terre rare forme avec l'élément métallique associé au silicate, un composé soluble dans le milieu réactionnel.

Ce milieu réactionel est généralement un milieu aqueux.

Toutefois, il peut être également un milieu organique, le solvant utilisé de manière préférentielle étant un alcool.

La solution de silicate métallique est ajoutée dans la solution de terres rares soit d'un seul coup, soit progressivement.

Le composé basique est ajouté soit après l'addition de la solution de silicate métallique, soit simultanément à l'addition de celle-ci. Il est également possible de mélanger préalablement le composé basique avec la solution de silicate métallique.

Les concentrations en composés de terres rares, en silicate métallique ou composé basique dans les différentes solutions ne sont pas critiques. Toutefois, pour l'économie du procédé, les concentrations seront les plus élevées possibles en tenant compte des coefficients de solubilité des différents composés.

Les composés de terres rares convenables pour l'invention sont les composés solubles en milieu aqueux ou organique, notamment alcoolique, et les composés dispersables dans ces milieux.

A titre d'exemple, on peut citer les nitrates, chlorures, hydroxydes, acétates de terres rare, et plus particulièrement les sels de gadolinium, yttrium, lanthane.

Le silicate de terre rare utilisé selon la présente invention peut se présenter sous différente forme, à savoir notamment les trois formes principales connus de silicate :

– le métasilicate de formule

$$TR_2(SiO_3)O \text{ ou } TR_2O_3 ; SiO_2$$

– le pyrosilicate de formule

$$TR_2 Si_2O_7 \text{ ou } TR_2O_3 ; 2SiO_2$$

– le silicate de type apatite de formule

$$TR_{4,67}O(SiO_4)_3 \text{ ou } 7TR_2O_3 ; 9SiO_2$$

L'analyse par diffraction X des silicates obtenus par le procédé de synthése selon l'invention montre que ce dernier permet d'obtenir soit un pyrosilicate de terres rares quand le rapport $SiO_2/TR_2O_3$ est supérieur à la stoechiométrie c'est à dire supérieur à 2,35, soit un silicate de terre rare de type apatite quand ce rapport $SiO_2/TR_2O_3$ est inférieur à 2,35 ; dans ce dernier cas, on note en outre dans le produit final la présence de $Na_2O$, généralement à raison de l'ordre de quelques pourcents en poids.

Selon la présente invention, on utilise de préférence des silicates choisis parmi des pyrosilicates, des silicates de type apatite, ou des mélanges de pyrosilicates et de silicates de type apatite, exempts de silice libre, et notamment tels que préparés selon le procédé de synthése conforme à l'invention décrit ci-avant.

D'autres détails, caractéristiques de l'invention apparaissent plus clairement au vu des exemples donnés uniquement à titre indicatif et des figures annexées dans lesquelles :

– **la figure 1** représente les courbes d'Analyse Thermique Differentielle des mélanges verriers décrit aux exemples 1b 1c, par la variation de température représentée par la variation de la différence de potentiel d'un thermocouple en fonction de la température, et

– **la figure 2** est une représentation analogue à celle de la figure 1 pour les essais 2b et 2c.

3

Exemple 1

a) **préparation du silicate de lanthane**

Une solution de silicate de sodium ($N_{a2}O$ ; $2,2SiO_2$) est ajoutée dans une solution de nitrate de lanthane. Le pH du milieu réactionnel varie entre 7 et 9,3, en fin de réaction.

Le silicate obtenu après filtration et séchage est une poudre blanche amorphe dont l'analyse donne les résultats suivants, après calcination à 960°C

$$La_2O_3 \quad = \quad 34 \quad \% \quad en \ poids$$
$$SiO_2 \quad = \quad 66 \quad \% \quad en \ poids$$
$$Surface \ spécifique \quad 1m^2/g$$

L'analyse par diffraction X de ce produit après calcination à 960°C montre qu'il comprend deux phases cristallines identifiées correspondant à $La_2Si_2O_7$ (pyrosilicate de lanthane) et $SiO_2$ (cristobalite). Toutefois, la phase cristobalite n'est pas détectée dans le précipité uniquement séché.

b) **préparation d'une composition verrière**

On prépare un mélange pour former une composition verrière du type boroaluminosilicate, de composition pondérale suivante (exprimée en oxyde d'élément) :

$$SiO_2 \quad 30$$
$$Al_2O_3 \quad 10$$
$$B_2O_3 \quad 20$$
$$La_2O_3 \quad 40$$

le lanthane est ajouté sous forme de silicate de lanthane obtenu selon le procédé décrit ci-dessus, le mélange ainsi obtenu est fondu sous air par chauffage jusqu'à une température de 1350°C.

La température et la vitesse de fusion est déterminée par Analyse Thermique Differentielle (ATD). Cette analyse est représentée par la courbe A de la figure 1.

c) **essai comparatif**

Une composition verrière de même composition que celle décrite à l'exemple 1b est réalisée par mélange des différents oxydes de silicium, bore, aluminium et lanthane.

La température et la vitesse de fusion de ce mélange est également déterminée par ATD. Le résultat est représenté par la courbe B de la figure 1.

La comparaison des courbes A et B montre un gain de 60°C sur la température de fusion et également une vitesse de fusion plus élevée pour la composition verrière de l'exemple 1b.

Exemple 2

a) **préparation de silicate de lanthane**

Une solution de silicate de sodium de formule $Na_2O$ ; $2,2SiO_2$ à 3,36 mole/l est ajoutée dans une solution de nitrate de lanthane, de manière à avoir des rapports $SiO_2/La_2O_3$ différents (voir tableau ci-dessous).

Puis, de la soude est ajoutée dans le milieu réactionnel pour obtenir un pH égal à 11 en fin de réaction.

Le précipité est ensuite filtré, puis lavé par de l'eau pour notamment éliminer le nitrate de sodium formé.

Le produit est ensuite séché à 110°C puis calciné à 960°C pendant 1 heure.

Les phases critallines du produit obtenu sont déterminées par analyse diffraction X.

Les résultats obtenus sont rassemblés dans le tableau ci-dessous :

4

| Rapport $SiO_2/La_2O_3$ | pH (fin de précipitation) | Après calcination à 900°C pendant 1 heure | | |
|---|---|---|---|---|
| | | % $La_2O_3$ | % $SiO_2$ | phase cristalline |
| 1,72 | 11 | 80 | 20 | Silicate type apatite |
| 2,13 | 11 | 77 | 23 | Silicate type apatite |
| 2,26 | 11 | 75 | 25 | Silicate type apatite |
| 2,68 | 11 | 71 | 29 | Pyrosilicate |

b) **fabrication d'une composition en verrière**

On prépare une composition verrière identique à celle décrite à l'exemple 1b en utilisant un pyrosilicate de lanthane fabriqué selon le procédé décrit en 2a.

La température et la vitesse de fusion de la composition est déterminée par ATD. Le résultat est représenté par la courbe A de la figure 2.

c) **essai comparatif**

La courbe B de la figure 2 représente les résultats de l'analyse Thermique differentielle d'une composition verrière identique à celle de l'exemple 2b mais obtenue en mélangeant uniquement des oxydes.

La comparaison des courbes A et B montre comme dans l'exemple 1 un gain sur la température de fusion et la vitesse de fusion de la composition verrière obtenue par utilisation d'un silicate de lanthane.

**Revendications**

1- Procédé d'obtention d'une composition verrière à base de silicates métalliques et contenant au moins une terre rare, caractérisé en ce qu'il consiste à ajouter la terre rare dans le mélange de poudres précurseur de la composition verrière sous forme d'un silicate de terre rare, puis à fondre ce mélange pour former le verre.

2- Procédé selon la revendication 1, caractérisé en ce que le silicate de terre rare est exempt de silice libre.

3- Procédé selon l'une des revendications 1 à 2 caractérisé en ce que le silicate de terre rare est ajouté dans une quantité comprise entre 10 % et 70 % en poids exprimés en oxyde de terres rares par rapport à la masse totale du mélange exprimée en oxyde des éléments le composant.

4- Procédé selon l'une des revendications précédentes, caractérisé en ce que les constituants de la composition verrière sont choisis pour réaliser un verre de type silicate, borosilicate, aluminosilicate, ou boroaluminosilicate.

5- Procédé selon l'une des revendications 1 à 5, caractérisé en ce que le silicate de terre rare est un silicate de lanthane, gadolinium, yttrium, ou cérium.

6- Procédé selon l'une quelconque des revendications 1 à 5, caractérisé en ce que ledit silicate est choisi parmi les pyrosilicates, les silicates de type apatite, ou leurs mélanges.

7- Procédé de préparation d'un silicate de terres rares notamment utilisé dans le procédé d'obtention de composition verrière selon l'une des revendications 1 à 6 caractérisé en ce qu'il consiste à ajouter dans une solution ou suspension d'un composé de terres rares, une solution de silicate métallique ou d'ammonium, l'anion associé aux terres rares formant avec le métal du silicate ou l'ion ammonium un composé soluble, et à ajouter un composé basique pour obtenir en fin de précipitation du silicate de terres rares un pH supérieur à 9, puis à séparer le précipité, le laver et sécher éventuellement et à lui faire subir un traitement thermique à une température supérieure à 800°C.

**8-** Procédé selon la revendication 7, caractérisé en ce que les solutions de silicate métallique et du composé basique sont ajoutées successivement dans la solution ou suspension de composés de terres rares.

**9-** Procédé selon la revendication 7, caractérisé en ce que les solutions de silicate métallique ou d'ammonium et du composé basique sont ajoutées simultanément sous forme d'une seule solution ou de deux solutions.

**10-** Procédé selon l'une des revendications 7 à 9, caractérisé en ce que le composé de terres rares est choisi parmi les composés de lanthane, yttrium, gadolinium ou leurs mélanges.

**11-** Procédé selon l'une des revendications 7 à 10, caractérisé en ce que la quantité de silicate métallique ajoutée est déterminée pour avoir un rapport atomique $SiO_2/TR_2O_3$, en fin de précipitation, compris entre 1,5 et 3, de préférence entre 1,7 et 2,9.

**12-** Procédé selon l'une des revendications 7 à 11, caractérisé en ce que le silicate métallique est choisi parmi les silicates de métaux alcalins.

**13-** Procédé selon l'une des revendications 7 à 12, caractérisé en ce que les composés de terres rares sont choisis parmi les nitrates, chlorures, hydroxydes et acétates.

**14-** Procédé selon l'une des revendications 7 à 13, caractérisé en ce que la solution ou suspension du composé de terres rares est une solution ou suspension aqueuse.

**15-** Procédé selon l'une des revendications 7 à 13, caractérisé en ce que la solution ou suspension du composé de terres rares est une solution organique, de préférence une solution alcoolique.

**16-** Procédé selon l'une des revendications 7 à 15 caractérisé en ce que l'état de traitement thermique du précipité est conduite à une température comprise entre 900°C et 1200°C.

**17-** Procédé selon l'une des revendications 7 à 16 caractérisé en ce que le composé basique est un hydroxyde choisi dans le groupe comprenant les hydroxydes de métaux alcalins, l'ammoniaque.

**18-** Procédé selon l'une des revendications 7 à 17, caractérisé en ce que l'étape de précipitation est réalisée à une température comprise entre 15°C et 80°C.

Office européen
des brevets

**RAPPORT DE RECHERCHE EUROPEENNE**

Numero de la demande

EP 91 40 2925

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | CHEMICAL ABSTRACTS, vol. 104, no. 18, 5 mai 1986, page 330, abrégé no. 154204x, Columbus, Ohio, US; Kh. A. CHERCHES et al.: "Preparation of cerium silicates", & VESTSI AKAD. NAVUK BSSR, SER. KHIM. NAVUK 1986, (1), 6-9 * Abrégé * | 1-18 | C 03 C 1/00<br>C 03 C 3/068<br>C 03 C 3/095<br>C 01 B 33/20 |
| A | CHEMICAL ABSTRACTS, vol. 78, no. 12, 26 mars 1973, page 497, abrégé no. 79130j, Columbus, Ohio, US; G.G. BABAYAN et al.: "Reaction between cerium(IV) sulfate and sodium metasilicate in an aqueous medium", & UCH. ZAP., EREVAN. UNIV. ESTESTV. NAUKI 1972, NO. 1, 79-85 * Abrégé * | 7-18 | |
| A | CHEMICAL ABSTRACTS, vol. 98, no. 26, juin 1983, page 138, abrégé no. 218030e, Columbus, Ohio, US; Kh.A. CHERCHES et al.: "Production of low-temperature europium pyrosilicate from a co-precipitated charge", & STEKLO, SITALLY SILIK. 1982, 11, 138-41 * Abrégé * | 7-18 | **DOMAINES TECHNIQUES RECHERCHES (Int. Cl.5)**<br><br>C 03 C<br>C 01 B |
| A | CHEMICAL ABSTRACTS, vol. 61, no. 2, 20 juillet 1964, colonne 1486, ref. no. E, Columbus, Ohio, US; T.V. PERMYAKOVA et al.: "Preparation of lanthanum silicates", & ZH. NEORGAN. KHIM. 9(4), 925-30(1964) * Abrégé * | 7-18 | |

-/-

Le présent rapport a été établi pour toutes les revendications

| Lieu de la recherche | Date d'achèvement de la recherche | Examinateur |
|---|---|---|
| LA HAYE | 04-02-1992 | VAN BOMMEL L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

Office européen
des brevets

**RAPPORT DE RECHERCHE EUROPEENNE**

Numero de la demande

EP   91 40 2925

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | SOVIET JOURNAL OF GLASS PHYSICS AND CHEMISTRY, vol. 3, no. 2, avril 1977, pages 164-167, New York, US; V.I. ALEKSANDROV et al.: "The production and properties of hard glasses in the $R_2O_3-Al_2O_3-SiO_2$ systems" * Le document en entier * | 1-6 | |

DOMAINES TECHNIQUES RECHERCHES (Int. Cl.5)

Le présent rapport a été établi pour toutes les revendications

| Lieu de la recherche | Date d'achèvement de la recherche | Examinateur |
|---|---|---|
| LA HAYE | 04-02-1992 | VAN BOMMEL L. |